Europäisches Patentamt

European Patent Office

Office européen des brevets

(19)

(11) Publication number: **0 221 504**
A2

(12) **EUROPEAN PATENT APPLICATION**

(21) Application number: 86114999.5

(22) Date of filing: 19.04.84

(51) Int. Cl.⁴: **B 60 B 33/00**

(30) Priority: 26.04.83 US 488863

(43) Date of publication of application:
13.05.87 Bulletin 87/20

(84) Designated Contracting States:
DE FR GB

(60) Publication number of the earlier application
in accordance with Art. 76 EPC: 0 123 298

(71) Applicant: STANDEX INTERNATIONAL CORPORATION
6 Manor Parkway
Salem New Hampshire 03079(US)

(72) Inventor: Black, John William
5281 Walnut Grove
Hickory Corners Michigan(US)

(74) Representative: Liebau, Gerhard, Dipl.-Ing.
Birkenstrasse 39 Postfach 22 02 29
D-8900 Augsburg 22(DE)

(54) Wheel bracket assembly adapted to facilitate lubrication of a bearing thereof.

(57) A wheel bracket assembly comprising: a wheel bracket which includes two spaced portions, an axle extending between and supported on the bracket portions, a wheel, a bearing rotatably supporting the wheel on the axle, and first and second dust covers provided on opposite sides of the wheel, the first dust cover slidably engaging and being rotatably about the axle relative to the bracket but being noramlly held against such relative rotation through frictional engagement with the bracket. The first dust cover has a region which is spaced a predetermined radial distance from the axle and is approximately radially aligned with the bearing, and is manually rotatable relative to the associated bracket portion between a first position in which the region thereof is externally exposed and accessible and a second position in which the region is firmly disposed against an inner surface of the bracket portion so that external access thereto is obstructed by the bracket portion. The first dust cover has an arrangement at the region thereof for facilitating the introduction through the first dust cover of a lubricating material for the bearing.

EP 0 221 504 A2

-1-

## WHEEL BRACKET ASSEMBLY ADAPTED TO FACILITATE LUBRICATION OF A BEARING THEREOF

### FIELD OF THE INVENTION

This invention relates to a wheel bracket assembly, and more particularly to a wheel bracket assembly in which relubrication of the bearing can be easily and inexpensively effected.

### BACKGROUND OF THE INVENTION

Wheel bracket assemblies, which include a wheel bracket and a wheel rotatably supported on the bracket, are utilized in many applications, for example on shopping carts. In applications of this type, the wheel bracket assembly is frequently subjected to rough treatment and therefore must be durable and reliable. However, in industries which are highly competitive, it is also important that the wheel bracket assembly be relatively inexpensive in order to minimize the overall cost of the final product.

One conventional wheel bracket assembly used in applications of this type includes a U-shaped horn with the wheel rotatably supported between its legs, and a pin which is riveted in an opening in the bight of the horn and has transverse holes drilled therethrough (see Figure 14). Although this conventional arrangement has been adequate for its intended purposes, it has not been satisfactory in all respects.

For example, although the bearing in wheel bracket assemblies of the foregoing type are typically designed so that the lubrication applied to the bearings at the factory will last the useful lifetime of the device, situations sometimes arise in which additional lubrication is necessary. In conventional wheel bracket assemblies, further lubrication has typically required that the wheel bracket assembly be disassembled, the wheel lubricated, and the wheel bracket assembly then reassembled. This is a relatively expensive procedure, and its cost can frequently approach or exceed the cost of a new wheel bracket assembly thus making relubrication economically impractical.

Accordingly, an object of the present invention is to provide a wheel bracket assembly which is simple in structure and is relatively simple and inexpensive to manufacture.

A further object of the invention is to provide a wheel bracket assembly, as aforesaid, which can be fabricated with a minimum number of steps and with a minimal amount of labor.

A further object of the invention is to provide a wheel bracket assembly, as aforesaid, which is rugged and durable and requires no maintenance over its useful lifetime.

A further object of the invention is to provide a wheel bracket assembly, as aforesaid, which has an aesthetically pleasing appearance and preferably a somewhat streamlined shape.

A further object of the invention is to provide a wheel bracket assembly, as aforesaid, which has a small amount of pivoting and/or shock-absorbing capability when mounted on a shopping cart or similar vehicle.

A further object of the invention is to provide a wheel bracket assembly, as aforesaid, which includes a structurally simple arrangement for gaining access to the sealed bearing of the wheel in order to facilitate lubrication of the bearing in the unlikely event that lubrication should become necessary at some time during the useful life of the bearing.

## SUMMARY OF THE INVENTION

The objects and purposes of the invention, including those set forth above, are met by providing a wheel bracket assembly comprising: a wheel bracket which includes two spaced portions, an axle extending between and supported on the bracket portions, a wheel, a bearing rotatably supporting the wheel on the axle between the bracket portions, and first and second dust covers provided on opposite sides of the wheel to protect the bearing and each disposed between the wheel and a respective bracket portion, the first dust cover slidably engaging and being rotatable about the axle relative to the bracket but being normally held against such relative rotation through frictional engagement with the bracket. The first dust cover has a region which is spaced a predetermined radial distance from the axle and approximately radially aligned with the bearing, and is manually rotatable relative to the bracket portion associated therewith between a first position in which the region thereof is externally exposed and accessible and a second position in which the region is firmly disposed against an inner surface of the bracket portion and external access thereto is obstructed by the bracket portion. The first dust cover also has an arrangement at the region thereof for facilitating the introduction through the first dust cover of a lubricating material for the bearing.

BRIEF DESCRIPTION OF THE DRAWINGS

The subject matter of the invention will be discussed in more detail hereinafter in connection with the exemplary embodiment illustrated in the drawings, in which:

Figure 1 is a perspective view of a wheel bracket assembly embodying the invention;

Figure 2 is a front elevational view of the wheel bracket assembly of Figure 1;

Figure 3 is a rear elevational view of the wheel bracket assembly of Figure 1;

Figure 4 is a perspective view of a bracket part which is a component of the wheel bracket assembly of Figure 1;

Figure 5 is a different perspective view of the bracket part of Figure 4;

Figure 6 is an elevational side view of the wheel bracket assembly of Figure 1 with the wheel and axle omitted and a tubular leg of a shopping cart shown in section;

Figure 7 is a fragmentary sectional front view of the wheel bracket assembly of Figure 1;

Figure 8 is a fragmentary elevational side view similar to Figure 6 of an alternative embodiment of the wheel bracket assembly of Figure 1;

Figure 9 is a fragmentary elevational side view similar to Figure 6 of a further embodiment of the wheel bracket assembly of Figure 1;

Figure 10 is a fragmentary elevational side view similar to Figure 9 of a further embodiment of the wheel bracket assembly of Figure 1;

Figure 11 is a fragmentary elevational side view similar to Figure 9 of a further embodiment of the wheel bracket assembly of Figure 1;

Figure 12 is a fragmentary elevational side view similar to Figure 9 of a further embodiment of the wheel bracket assembly of Figure 1;

Figure 13 is a fragmentary sectional view similar to Figure 6 of a further embodiment of the wheel bracket assembly of Figure 1; and

Figure 14 is a fragmentary elevational side view of a conventional wheel bracket assembly with the wheel shown only in broken lines.

Certain terminology is used in the following description for convenience in reference only and is not to be considered limiting. For example, the words "up", "down", "front" and "rear" will designate directions in the drawings to which reference is made. The words "in" and "out" will respectively refer to directions toward and away from the geometric center of the wheel bracket assembly and designated parts thereof. Such terminology will include the words specifically mentioned above, derivatives thereof and words of similar import.

DETAILED DESCRIPTION

A wheel bracket assembly 10 of conventional construction is illustrated in Figure 14. It includes a wheel bracket 11 which can rotatably support a wheel 12. The wheel bracket 11 includes a horn 13 which is made from a single piece of sheet metal bent to substantially a U-shape and has a bight 16 and two spaced, parallel legs 17 and 18. A hexagonal opening 19 is provided through the bight 16, and the legs 17 and 18 each have an opening 21 therethrough adjacent the lower end thereof. A pin 14 has a cylindrical shank 23 which extends through the opening 19 in the bight 16 and has a head 22 disposed against the undersurface of the bight 16. An upset 26 retains the pin 14 in place and is produced by shearing material from the pin 14. This shearing step causes the material of the pin 14 to flow to fill the hexagonal opening 19 and thereby prevent rotation of the pin 14 relative to the horn 13. Two vertically spaced transverse openings 24 are provided through the shank 23 of the pin 14.

Fabrication of the wheel bracket assembly 10 of Figure 14 requires a number of separate steps. More specifically, the pin 14 must be fabricated with the circular shank 23 and the head 22, and then the openings 24 must be drilled through the shank 23. The horn 13 must be stamped from a piece of metal, and must then be placed in a device which bends it to a U-shape. Thereafter, the pin must be inserted through the hexagonal opening 19, and material must then be sheared from the shank 23 to create the upset 26. Then, a wheel must be placed between the legs 17 and 18 with its axle received in the openings 21, and then one or both ends of the axle must be upset to secure it in position.

The wheel bracket assembly 10 of Figure 14 is thus relatively complex and expensive to manufacture. Moreover, the connection between the horn 13 and pin 14 is frequently subject to relatively large stresses during use and may tend to become loose over a period of time.

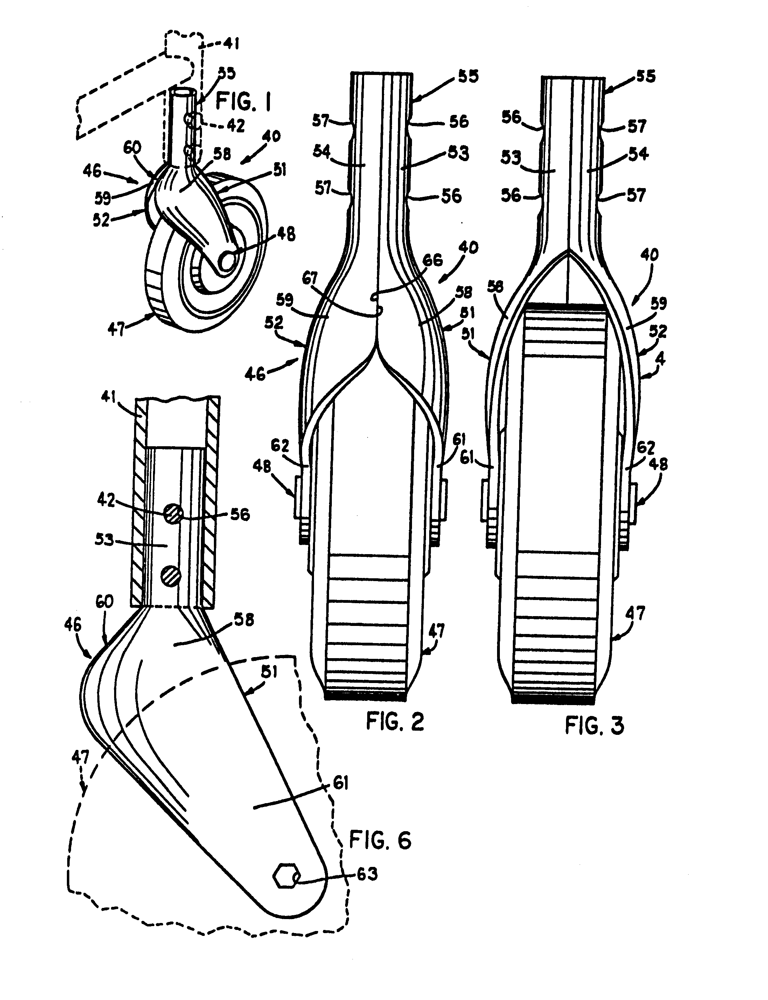

An improved wheel bracket assembly embodying the present invention is illustrated in Figure 1 and designated by reference numeral 40. The wheel bracket assembly 40 is shown in a typical application, namely, secured to a tubular rear leg 41 of a shopping cart frame by rivets or pins 42.

The wheel bracket assembly 40 includes a wheel bracket 46 and a wheel 47 which is rotatably supported on the wheel bracket 46 by means of an axle 48. The wheel 47 and axle 48 are discussed in greater detail hereinafter.

The wheel bracket 46 consists of two wheel bracket parts 51 and 52 which are mirror images of each other and are each made from a metal plate.

As shown in Figures 2 to 5, a respective stem portion 53 or 54 is provided at the upper end of each of the bracket parts 51 and 52. The stem portions 53 and 54 are each elongate, of uniform width, and bent to a substantially semicylindrical shape. The stem portion 53 has two vertically spaced openings 56 therethrough, and the stem portion 54 has corresponding openings 57 therethrough.

Each of the bracket parts 51 and 52 has a respective central region 58 or 59 which flares downwardly and outwardly from the lower end of the associated stem portion, is curved somewhat, and increases in width in a direction away from the stem portion.

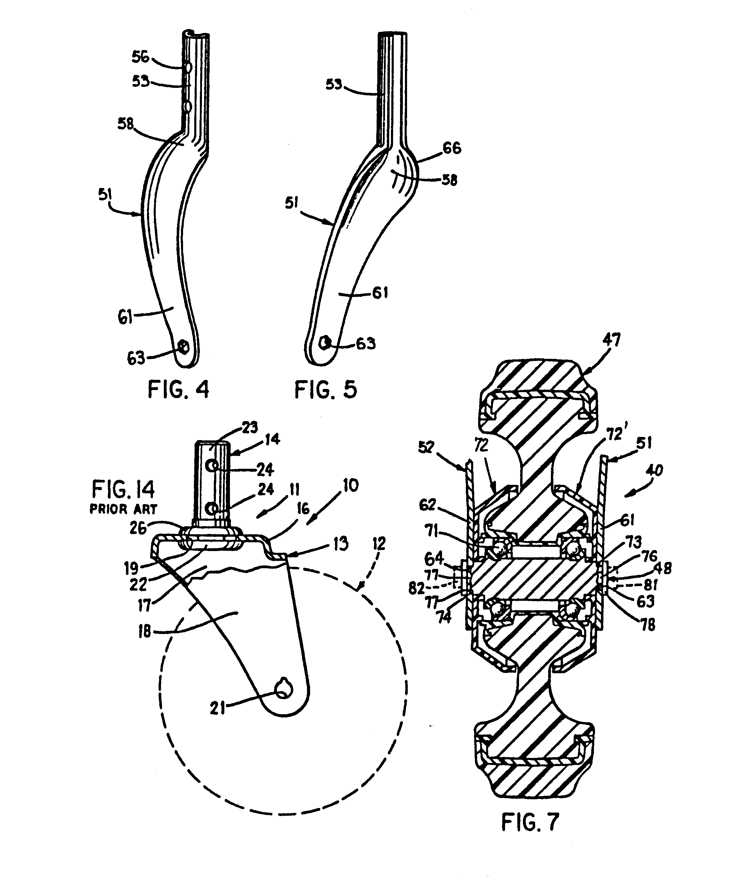

The central regions 58 and 59 each merge into a respective lower region 61 or 62 which extends substantially vertically downwardly, is substantially flat, and tapers in width in a downward direction. A respective noncircular opening 63 or 64 (Figures 6 and 7), which in the preferred embodiment is hexagonal, is provided through each of the bracket parts 51 and 52 adjacent the lower end thereof.

As best shown in Figures 2 and 3, the bracket parts 51 and 52 are arranged in a mirror image relationship in the wheel bracket assembly 40. The stem portions 53 and 54 are adjacent and the lateral edges thereof engage each other, so that the stem portions 53 and 54 define a substantially cylindrical tube or stem 55. The openings 56 and 57 in the stem portions 53 and 54 are aligned with each other. The central regions 58 and 59 flare downwardly and outwardly away from each other, as best shown in Figure 3, but the curvature thereof permits the front lateral edges 66 and 67 of the central regions to engage each other along most of their length, as best shown in Figure 2. As shown in Figures 1 and 6, the portions of the central regions 58 and 59 forward of the stem 55 define a smoothly curved, somewhat bulbous front surface 60 which gives the bracket 46 a streamlined appearance and also helps to minimize damage or injury to property or people which the bracket 46 strikes during operational use.

The lower portions 61 and 62 of the bracket parts 51 and 52 are spaced and extend substantially parallel to each other on opposite sides of the wheel 47.

Referring to Figure 7, dust covers 72 are provided on each side of the wheel 47, and the wheel 47 is rotatably supported on the axle 48 by plural ball bearings 71. The wheel 47 and dust covers 72 are preferably identical to those disclosed in U.S. Patent No. 4 318 204, the disclosure of which is incorporated herein by reference. Accordingly, the wheel 47 and dust covers 72 are not described in detail here.

The axle 48 is a solid axle and is similar to the axle disclosed in U.S. Reissue Patent No. 31 110, the disclosure of which is incorporated herein by reference. The axle 48 has respective axially outwardly facing annular shoulders 73 and 74 adjacent each end thereof which the lower portions 61 and 62 of the bracket parts 51 and 52 engage. Respective shanks 76 and 77 project axially outwardly beyond the shoulders 73 and 74 through the hexagonal openings 63 and 64 in the bracket parts 51 and 52. The outer end of each of the shanks 76 and 77 is upset to keep the bracket parts 51 and 52 in position.

The shanks 76 and 77, prior to creation of the upsets 78 and 79, project outwardly as shown in broken lines at 81 and 82 and have a circular cross section with a diameter slightly less than the minimum cross-sectional dimension of the hexagonal openings 63 and 64. As the upsets 78 and 79 are formed, the material of the shanks 76 and 77 flows to fill the openings 63 and 64, thereby securing the bracket parts 51 and 52 against rotation relative to each other or the axle 48, and thus maintaining them in angular alignment with each other.

A method of fabricating the wheel bracket assembly 40 will now be described.

A metal plate from which the bracket parts 51 and 52 are to be made is placed in a conventional stamping press having a specially formed die therein. A single stamping operation is carried out, which stamps out the two wheel bracket parts 51 and 52, produces the openings 56, 57, 63 and 64 therein, and, due to the shape of the die, simultaneously bends the bracket parts to the required shape.

The bracket parts 51 and 52 are then placed on opposite sides of the wheel 47, the ends 81 and 82 of the circular shanks 76 and 77 projecting through the hexagonal openings 63 and 64 as shown in Figure 7. The bracket parts 51 and 52 are angularly aligned so that the stem portions 53 and 54 are adjacent and define the cylindrical stem 55, and so that respective openings 56 and 57 in the stem portions 53 and 54 are aligned. The shank ends 81 and 82 are then upset as at 78 and 79, which causes the material of the shanks 76 and 77 to flow and fill the hexagonal openings 63 and 64, so that the wheel bracket parts 51 and 52 are fixed against axial movement and rotational movement relative to each other and to the axle 48.

The wheel bracket assembly 40 is then ready for shipment to a customer. It is unnecessary to provide any further interconnection between the wheel bracket parts 51 and 52 because the shoulders 73 and 74 and the upsets 78 and 79 will keep the bracket parts 51 and 52 from moving axially on the axle 48 and cooperation between the hexagonal shank portions 76 and 77 and the hexagonal openings 63 and 64 will prevent relative rotational movement of the angularly aligned bracket parts 51 and 52. Thus, the customer is provided with an assembly that is convenient to handle and install on a selected device.

The metal plate from which the bracket parts 51 and 52 are stamped is preferably a high carbon steel plate such as type C-1065 and, after the stamping operation, is preferably heat treated and drawn to give it a Rockwell hardness in the range of 45 to 55 Rockwell C and preferably 48 to 52 Rockwell C. This essentially converts the plate to spring steel. The thus increased tensile strength of the steel will enable the steel to withstand substantial shock loads without any plastic deformation.

The wheel bracket assembly 40 is thus relatively simple in structure and can be manufactured in a minimal amount of time with a minimal number of manufacturing steps. Moreover, it is very rugged and durable, particularly in view of the fact that the stem portions 53 and 54 are integral sections of the bracket parts 51 and 52 and thus will not develop play with respect thereto after extended use.

Although the axle shanks 76 and 77 (Figure 7) are preferably given a hexagonal shape by flow of the material of the axle during formation of the upsets 78 and 79, it will be recognized that the shanks 76 and 77 could alternatively be given an initial shape which has a hexagonal cross section.

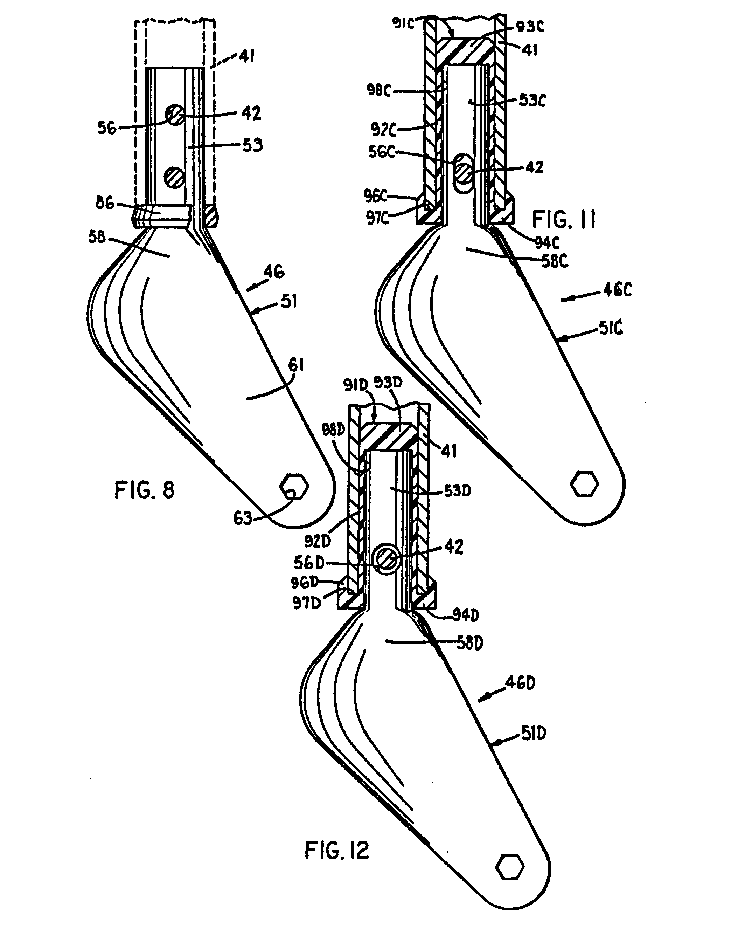

Figures 8 to 12 illustrate alternative embodiments of the wheel bracket assembly 40 of Figure 1. Elements which are identical to those in the embodiment of Figure 1 are designated by the same reference numerals, and elements which are similar are also designated by the same reference numerals but with a suffix "A" through "E" added thereto.

The embodiment of Figure 8 includes a wheel bracket 46 which is identical to the wheel bracket 46 of Figure 1 and is therefore not described in detail. A circular grommet 86 snugly encircles the cylindrical stem 53 of the bracket 46 at the end thereof adjacent the central region 58. The circular grommet 86 is preferably a molded plastic part and, during manufacture of the wheel bracket assembly, is slid onto the stem 53 after the parts of the bracket 46 have been secured in position by upsetting the ends of the wheel axle. Alternatively, the grommet 86 could be placed over the stem 53 prior to upsetting the ends of the axle in order to maintain the parts of the bracket 46 in proper angular alignment during the upsetting operation. When the stem 53 of this wheel bracket is secured in a tube 41 by rivets 42, the lower end of the tube 41 engages the top surface of the grommet 86.

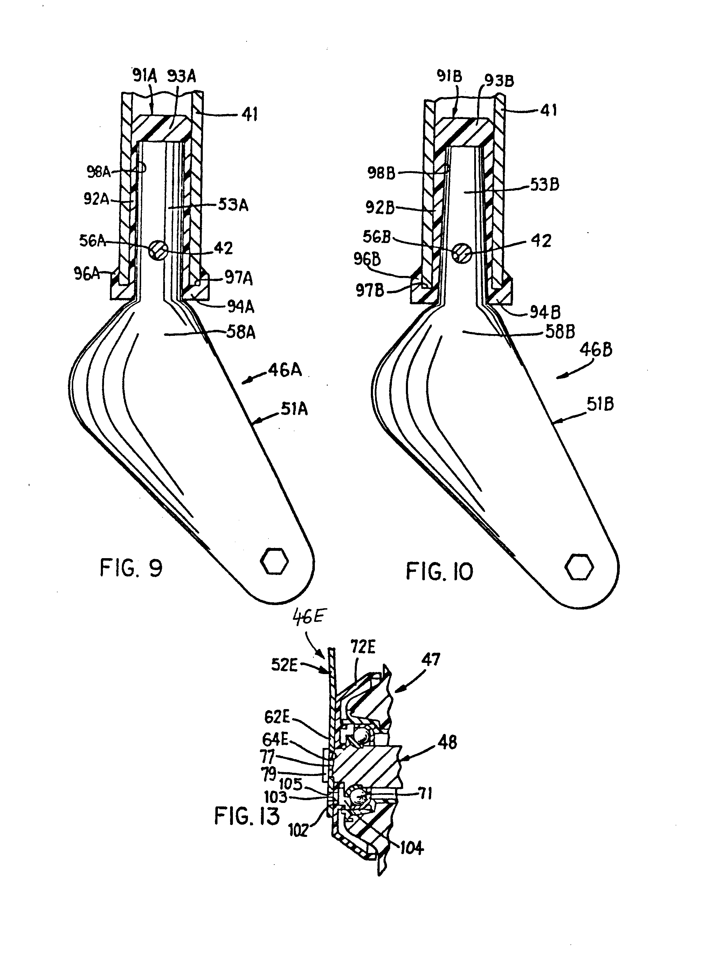

The alternative embodiment of Figure 9 includes a wheel bracket 46A which is substantially identical to the wheel bracket 46, except that only one opening 56A is provided in the stem 53A. A boot 91A is provided over the stem 53A and includes a cylindrical sleeve 92A which snugly surrounds the stem 53A, an end wall 93A which closes off the upper end of the sleeve 92A, a radially outwardly extending annular flange 94A which is provided at the lower end of the sleeve 92A, and an annular lip 96A which is provided at the radially outer edge of the flange 94A and extends axially toward the end wall 93A, thereby defining an annular recess 97A. The sleeve 92A snugly surrounds the stem 53A. The outer surface of the stem 53A and the inner surface 98A of the sleeve 92A have cross sections which are substantially constant along the length of the stem 53A and sleeve 92A. The cylindrical sleeve 92A has openings in opposite walls thereof which are aligned with the openings 56A and through which the rivet 42 extends when the wheel bracket is secured in the tube 41, the lower edge of the tube 41 being received in the annular recess 97A.

The boot 91A is made of a moldable synthetic resin material which is somewhat resilient, such as polyurethane having a Durometer hardness value in the range of 75 Shore A to 55 Shore D Durometer, and preferably 80 Shore A Durometer. The resiliency permits the stem 53A of the bracket 46A to pivot slightly within the tube 41 about the axis of the rivet 42 by elastically compressing the material of the boot 91A. This provides a degree a shock-absorbing capability during operational use which helps prolong the life of the bearing of a wheel supported on the bracket 46A.

The embodiment of Figure 10 is substantially identical to the embodiment of Figure 9, except that the cross-sections of the stem 53B of the bracket 46B and the internal surface 98B of the sleeve 92B taper upwardly. This provides a slightly larger amount of the resilient material of the boot 91B between the upper end of the stem 53B and the inner surface of the tube 41, thereby permitting a slightly greater amount of limited pivotal movement of the bracket 46B as compared to the embodiment of Figure 9.

The embodiment of Figure 11 is substantially identical to the embodiment of Figure 9, except that the openings 56C in the stem 53C, as well as the openings in the sleeve 92C aligned therewith, are elongate slots which extend lengthwise of the stem 53C and the sleeve 92C and have widths substantially equal to the diameter of the rivet 42. The wheel bracket 46C is thus capable of limited pivotal movement about the axis of the rivet 42 in a manner similar to the embodiment of Figure 9, and in addition is capable of a small amount of vertical movement relative to the tube 41 and boot 91C, thus improving its shock-absorbing capability. Upward movement of the bracket 46C from the position illustrated in Figure 11 requires a small amount of elastic deformation of the lower and upper ends of the boot 91C, and the boot 91C will thus tend to return the bracket 46C to the position illustrated in Figure 11.

The embodiment of Figure 12 is substantially identical to the embodiment of Figure 9, except that the openings 56D in the stem 53D, as well as the openings in the sleeve 92D which are aligned therewith, have a diameter somewhat greater than that of the rivet 42. The wheel bracket 46D can thus pivot about the axis of the rivet 42 and move vertically relative to the boot 91D and tube 41, in a manner similar to that described above for the embodiment of Figure 11. In addition, the wheel bracket 46D is capable of a limited amount of pivotal movement about a vertical axis coincident with the axis of the tube 41 due to the oversized circular openings 56D, thus increasing its shock-absorbing capability.

In addition to the shock-absorbing capability described above, the boots 91A-D of Figures 9 through 12 have the further advantage that they permit a given wheel bracket assembly having a stem of a given diameter to be used with a tube 41 which has one of several internal diameters. More specifically, depending on the internal diameter of the particular tube 41 on which the wheel bracket assembly is to be mounted, a boot is selected which has an internal diameter which corresponds to the stem and an external diameter which corresponds to the internal diameter of the selected tube 41. Thus, it is unnecessary to fabricate several expensive sets of stamping dies to make wheel brackets with stems of various diameters, and it is also unnecessary to manufacture and inventory a number of models of wheel brackets which have stems of various diameters. Instead, it is necessary only to manufacture and inventory several boots of different size and only a single version of the completed wheel bracket assembly, which is much more economical.

The modified embodiment according to Figure 13 is substantially identical to the embodiment of Figure 7, except that the dust cover 72E has an opening 103 through a region 102 thereof which is spaced radially from the axle 48 and is radially aligned with the annular space 104 in which the bearing arrangement 71 is provided. A small opening 105 is provided through the lower end of the bracket part 52E and is radially spaced from the axle 48 the same distance as the region 102 and opening 103.

It is possible for the dust cover 72E to rotate relative to the bracket part 52E and the axle 48, but frictional engagement of the dust cover 72E with these parts will normally keep it from rotating with the wheel 47 during operational use of the wheel bracket assembly. The dust cover 72E will usually be placed at an angular position relative to the bracket part 52E so that the openings 103 and 105 are not angularly aligned and are thus closed by the inner surface of the bracket part 52E and the outer surface of the dust cover 72E, respectively. If further lubrication of the bearing arrangement 71 should eventually become necessary, the dust cover 72E is manually rotated until the openings 103 and 105 are angularly aligned, then a lubricating substance is injected with a small nozzle through the aligned openings, and then the dust cover 72E is manually rotated relative to the bracket part 52E until the openings 103 and 105 are no longer aligned.

The dust cover 72E is preferably made of plastic, and it will be recognized that the region 102 thereof could be initially manufactured without the opening 103 but in a manner so that the opening 103 can be easily created when needed, for example by inserting an ice pick or similar tool through the opening 105 and using it to pierce the opening 103 through the region 102. In this case, the region 102 can be a circular zone which

-16-

is concentric to the axle 48 and has a radius equal to the distance from the axis of the axle 48 to the opening 105 in the bracket part 52E.

It will also be recognized that the opening 105 in the bracket part 52E can also be eliminated if the configuration of the bracket part 52E is such that the dust cover 72E can be moved between two angular positions relative to the bracket part 52E, in one of which the region 102 is externally exposed and accessible, and in the other of which the region 102 is disposed against the inner surface of the bracket part 52E. In this case, since the opening 105 is not provided to serve as a guide for piercing the opening 103 at the proper radial location, it is helpful to provide a visible mark on the dust cover 72E to clearly identify the region 102.

Although a particular preferred embodiment of the invention has been disclosed in detail for illustrative purposes, it will be recognized that variations or modifications thereof, including the rearrangement of parts, lie within the scope of the present invention.

CLAIMS

1. A wheel bracket assembly, comprising a wheel bracket (46, 46E) which includes two spaced bracket portions (61, 62, 62E), an axle (48) extending between and supported on said bracket portions (61, 62, 62E), a wheel (47), bearing means (71) rotatably supporting said wheel (47) on said axle (48) between said bracket portions, and first (72, 72E) and second (72') dust covers provided on opposite sides of said wheel to protect said bearing means and each disposed between said wheel and a respective said bracket portion, said first dust cover (72, 72E) slidably engaging said bracket portion (62, 62E) but being normally held against rotation relative to said bracket portion through frictional engagement with said bracket portion, characterized in that said first dust cover (72, 72E) has a region which is spaced a predetermined radial distance from said axle (48) and approximately radially aligned with said bearing means (71) and is manually rotatable about said axle (48) relative to said bracket portion (62, 62E) associated therewith between a first position in which said region thereof is externally exposed and accessible and a second position in which said region is firmly disposed against an inner surface of said bracket portion and external access thereto is obstructed by said bracket portion, and wherein said first dust cover has means (103) at said region thereof for facilitating the introduction through said first dust cover of a lubricating material for said bearing means.

2. The wheel bracket assembly of Claim 1, wherein said means for facilitating the introduction of a lubricating material includes means for facilitating piercing of said region of said first dust cover (72) to produce an opening therethrough , said opening providing external access to said bearing means (71) when said first dust cover is in said first position and being closed by the associated bracket portion (62) when said first dust cover is in said second position.

3. The wheel bracket assembly of Claim 2, wherein said first dust cover includes a pierceable annular zone which is concentric to said axle, said region being a portion of said annular zone.

4. The wheel bracket assembly of Claim 1, wherein said means for facilitating the introduction of a lubricating material includes said region of said first dust cover (72E) having an opening (103) therethrough which provides external access to said bearing means when said first dust cover is in said first position and which is closed by the associated bracket portion (52E) when said first dust cover is in said second position.

5. The wheel bracket assembly of Claim 1, wherein the bracket portion (62E) which slidably engages said first dust cover has an opening (105) therethrough, and wherein said region of said first dust cover (72E) is aligned with and externally accessible through said opening (105) when said first dust cover is in said first position.

FIG. 1

FIG. 2

FIG. 3

FIG. 6

0221504

2/4

FIG. 4

FIG. 5

FIG. 14
PRIOR ART

FIG. 7

0221504

3/4

FIG. 8

FIG. 11

FIG. 12

FIG. 9

FIG. 10

FIG. 13